# EUROPEAN PATENT APPLICATION

(11) **EP 4 339 917 A1**
(43) Date of publication of application: **20.03.2024**
(21) Application number: 22841061.9
(22) Date of filing: 25.05.2022
(51) Int. Cl.: G08G 1/14, G06F 16/215, G01S 19/39

(54) **PARKING LOT LIST GENERATION METHOD, DEVICE, SERVICE APPARATUS AND STORAGE MEDIUM**

(30) Priority: 16.07.2021 CN 202110807470
(71) Applicant: Guangzhou Xiaopeng Autopilot Technology Co., Ltd., Guangzhou, Guangdong 510000 (CN)
(72) Inventor: DAI, Zhongjun, Guangzhou, Guangdong 510000 (CN)
(74) Representative: Isarpatent
(86) International application number: PCT/CN2022/094886
(87) International publication number: WO 2023/284421

(57) **Abstract**

Embodiments of the present application disclose a method for generating a parking lot list, a device for the same, a service apparatus, and a storage medium. The method comprises: acquiring entrance locations of vehicles driving into different parking lots; clustering the entrance locations to obtain data clusters, wherein each data cluster corresponds to one parking lot; determining standard entrance locations for the parking lots corresponding to each data cluster, based on the entrance locations included in each of the data clusters; generating the parking lot list including the standard entrance location for each parking lot. By implementing the embodiments of the present application, it is possible to quickly generate aparking lot list including the parking lots, and the standard entrance location of each parking lot is accurate, which is beneficial for using the parking lot list to assist in realizing intelligent parking.

## Description

The present application claims the priority of Chinese Patent Application No. 202110807470.9 entitled "Method And Device For Generating Parking Lot List, Service Apparatus And Storage Medium" filed on July 16, 2021 in the National Intellectual Property Administration of China, the whole disclosure of which is incorporated herein by reference.

### TECHNICAL FIELD

The present application relates to the field of automated driving technology, and in particular to a method for generating parking lot list, a device for the same, a service apparatus and a storage medium.

### BRIEF DESCRIPTION OF THE RELATED ART

Automated parking is an important part of automated driving field. In the process of automated parking, obtaining a location of a parking lot near a vehicle is beneficial to improve success rate of parking.

However, the base numbers of existing parking lots are huge, and is increasing day by day. Therefore, quickly obtaining the location information of the large number of parking lots has become an urgent problem to be solved in automated parking scenarios.

### SUMMARY OF THE DISCLOSURE

In order to solve or partially solve problems in the related prior art, embodiments of the present application provide a method for generating a parking lot list, a device for the same, a service apparatus and a storage medium capable of quickly generating a parking lot list including location information of multiple parking lots for use in automated parking.

Embodiments of the present application disclose a method of generating a parking lot list, the method comprising: acquiring entrance locations of vehicles driving into different parking lots; clustering the entrance locations to obtain data clusters, wherein each data cluster corresponds to one parking lot; determining standard entrance locations for the parking lots corresponding to each data cluster, based on the entrance locations included in each of the data clusters; generating the parking lot list including the standard entrance location for each parking lot.

In one embodiment, the parking lot list comprises available parking lots and unavailable parking lots; wherein the number of entrance locations included in the data clusters corresponding to the available parking lots is more than the number of entrance locations included in the data clusters corresponding to the unavailable parking lots.

In one embodiment, the method further comprises: determining weights of parking lots corresponding to the respective data clusters based on the number of entrance locations included in each of the respective data clusters; marking those parking lots in the parking lot list having weights greater than or equal to the weights threshold as available parking lots; and/or, marking those parking lots in the parking lot list having weights less than the weights threshold as unavailable parking lots.

In one embodiment, the method further comprises: acquiring a newly added entrance location of a first vehicle driving into the parking lot; finding a target parking lot matching to the newly added entrance location in the parking lot list based on the newly added entrance location and the standard entrance location of each parking lot in the parking lot list, and obtaining a lookup result; updating the parking lot list based on the lookup result.

In one embodiment, the step of updating the parking lot list based on the lookup results comprises: updating a first data cluster by adding the newly added entrance location to the first data cluster corresponding to the target parking lot, if the lookup result indicates that the parking lot list has a target parking lot matching to the newly added entrance location; adjusting the standard entrance location for the target parking lot based on the entrance location included in the updated first data cluster.

In one embodiment, the step of updating the parking lot list based on the lookup results comprises: adding the parking lot corresponding to the newly added entrance location to the parking lot list as a newly added parking lot, and determining the newly added entrance location as a standard entrance location for the newly added parking lot, if the lookup result indicates that the parking lot list does not have the target parking lot matching to the newly added entrance location.

In one embodiment, the step of adding the parking lot corresponding to the newly added entrance location to the parking lot list as a newly added parking lot, and determining the newly added entrance location as a standard entrance location for the newly added parking lot, comprises: querying in the parking lot list a historical parking lot into which the first vehicle had been driven based on an identification number of the first vehicle; determining a distance between the standard entrance location of the historical parking lot and the newly added entrance location; adding the parking lot corresponding to the newly added entrance location as the newly added parking lot to the parking lot list, when the distance is greater than or equal to a first distance threshold, and determining the newly added entrance location as the standard entrance location of the newly added parking lot.

In one embodiment, the method further comprises: updating a second data cluster by adding the newly added entrance location to the second data cluster corresponding to the historical parking lot, when the distance is less than the first distance threshold; adjusting the standard entrance location of the historical parking lot based on the entrance location included in the updated second data cluster.

In one embodiment, the method further comprises: acquiring the entrance location included in the data cluster corresponding to each parking lot in the parking lot list in accordance with a first time interval; re-clustering the acquired respective entrance locations to update the parking lot list according to the clustering results.

In one embodiment, the method further comprises: determining distances between the entrance locations included in the respective data clusters in accordance with a second time interval; deleting any one of the two entrance locations if the distance between two entrance locations is less than the second distance threshold.

In one embodiment, the method further comprises: determining the available parking lot that is close to a positioning location of a second vehicle based on the positioning location of the second vehicle and the standard entrance location thereof marked as the available parking lot in the parking lot list when the positioning location of the second vehicle is acquired; generating parking assisting information for the second vehicle based on parking lot information of said close available parking lot.

Embodiments of the present application provide a device for generating a parking lot list, comprising: an acquiring module, for acquiring entrance locations of vehicles driving into different parking lots; a clustering module, for clustering the entrance locations to obtain a plurality of data clusters, wherein each data cluster corresponds to one parking lot; a determining module, for determining a standard entrance location of the parking lot corresponding to each of the data clusters, based on the entrance locations included in each of the plurality of the data clusters; and a generating module, for generating the parking lot list including the standard entrance locations of the respective parking lots.

In one embodiment, the device further comprises: an updating module, for acquiring a newly added entrance location of the first vehicle driving into the parking lot; finding a target parking lot in the parking lot list that matches to the newly added entrance location, based on the newly added entrance location and the standard entrance location of each parking lot in the parking lot list and obtaining a lookup result; and updating the parking lot list according to the lookup result.

Embodiments of the present application provide a service apparatus comprising a memory and a processor, the memory having computer programs stored therein, the computer programs being configured to cause the processor to implement the method for generating a parking lot list as provided in any of the embodiments of the present application upon being executed by the processor.

Embodiments of the present application provide a computer readable storage medium, having computer programs stored thereon, the computer programs being configured to implement the method for generating a parking lot list as provided in any of the embodiments of the present application, upon being executed by the processor.

The embodiments of the present application have the following beneficial effects compared to the related prior art:

By implementing embodiments of the present application, entrance locations of vehicles driving into different parking lots may be acquired, and the entrance locations may be clustered to obtain a plurality of data clusters corresponding to the parking lots. Based on the entrance locations included in each data cluster, the standard entrance location of the corresponding parking lot can be determined, so that the parking lot list including the standard entrance locations of the parking lots can be generated. That is, the parking lot list including the parking lots can be generated quickly, and the standard entrance location of each parking lot is accurate, which is beneficial for using the parking lot list to assist in realizing intelligent parking.

It should be understood that the above general description and the detailed descriptions below are exemplary and explanatory only and do not limit the present application.

### BRIEF DESCRIPTION OF THE DRAWINGS

The foregoing and other purposes, features and advantages of the present application will be more apparent by describing the exemplary embodiments of the present application in detail in conjunction with the drawings, wherein the same reference numbers generally represent the same components in the exemplary embodiments of the present application.
FIG.1 is a schematic diagram of an architecture of a system for generating a parking lot list provided by an embodiment of the present application.
FIG.2 is a schematic diagram of a flowchart of a method for generating a parking lot list provided by an embodiment of the present application.
FIG.3 is a schematic diagram of a flowchart of another method for generating a parking lot list provided by an embodiment of the present application.
FIG.4 is a schematic diagram of a flowchart of another method for generating a parking lot list provided by an embodiment of the present application.
FIG.5 is a schematic diagram of a flowchart of an implementation of updating a parking lot list based on a lookup result provided by an embodiment of the present application.
FIG.6 is a schematic diagram of a flowchart of a method of applying a parking lot list as provided by an embodiment of the present application.
FIG.7 is a schematic diagram of a structure of a device for generating a parking lot list as provided by an embodiment of the present application.
FIG.8 is a schematic diagram of a structure of a service apparatus as provided by an embodiment of the present application.

### DETAILED DESCRIPTION OF EXEMPLARY EMBODIMENTS

The embodiments of the present disclosure will be described in detail below in conjunction with the accompany drawings. Although the embodiments of the present application are illustrated in the drawings, it should be understand that the present application may be realized in various forms without being limited by the embodiments set forth herein. Rather, these embodiments are provided to make the present application more thorough and complete and enable the scope of the present application to be communicated in its entirety to those skilled in the art.

The terminology used in the present application is used solely for the purpose of description and is not intended to limit the present application. In present application and appended claims, unless the context clearly indicates otherwise meaning, the single forms of "a/an", "the" and "said" are also intended to include plural forms. It should be also understood that the term "and/or" used herein refers to and encompasses any or all possible combinations of one or more associated listed items.

It should be understood, although the items "first", "second", "third" and so on are used in present application to describe various types of information, the information should not be limited by the items. These items are solely used to distinguish information of the same type from each other. For example, without departing from the scope of the present application, the first information may also be referred to as the second information, and similarly, the second information may also be referred to as the first information. As a result, a feature defined as "first" or "second" may expressly or implicitly include one or more such features. In the present application, "more than one" means two or more, unless otherwise specifically limited herein.

The technical solutions of the embodiments of the present application will be described specifically in conjunction with the accompanying drawings.

The embodiments of the present application provide a method for generating a parking lot list, a device for the same, a service apparatus and a storage medium, capable of quickly generating a parking lot list including location information of a number of parking lots for use in automated parking. The following are described in detail separately.

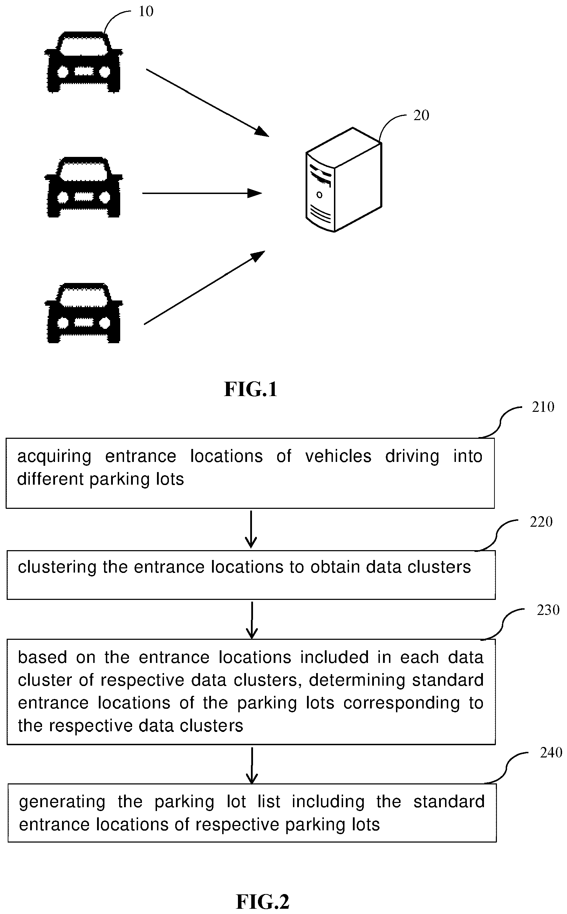

Please refer to FIG.1 , which is a schematic diagram of architecture of a system for generating a parking lot list. As shown in FIG.1, the system includes several vehicles 10, and a service apparatus 20. Each vehicle 10 and the service apparatus 20 may be connected to each other via communication connection for data communication.

The vehicle 10, which may be any vehicle that undertakes parking lot mapping task, may upload driving data of the vehicle 10 driving into the parking lot to the service apparatus 20. The driving data may include, but not limited to, one or a combination of the following items: Vehicle Identification Number(VIN),signal of Global Positioning System, identification result of pole barriers of the parking lot , detection result of parking space, parking and powering off signs. Vehicles 10 may include any professional mapping vehicle equipped with high-precision sensors or mass-production vehicles sold to customers, which are not limited specifically herein.

The service apparatus 20 includes cloud servers, cloud data center or the like that has established a communication connection with the plurality of vehicles 10 and has data processing capacities.

Please refer to FIG.2 which is a flow schematic diagram of a method for generating a parking lot list provided in an embodiment of the present application. The method may be applicable to the aforementioned service apparatus. As shown in FIG.2, the method can include following steps:
Step 210, acquiring entrance locations of vehicles driving into different parking lots.

The vehicles may drive into different parking lots, and one or more vehicles may drive into the same parking lot. The service apparatus can determine entrance location of each vehicle driving into the parking lot based on the GPS signal uploaded by each vehicle and/or the identification results of the barrier gate.

Exemplarily, the service apparatus may determine loss location of GPS signal as the entrance location of the parking lot. In the underground parking lot, the GPS signal received by vehicles is weakened due to the blockage of buildings. The loss location of GPS signal may refer to a location where the GPS signal can not be received; or GPS signal also includes the number of current answering GPS satellites, and when the number of current answering GPS satellites is less than a number threshold, the location where current answering GPS satellites signal be received may be determined as the loss location of GPS signal. Further, if the service apparatus acquires a plurality of loss locations of GPS signal of the vehicles, the positions of the plurality of loss locations of the GPS signal may be fused to determine the entrance location of the parking lot, and the ways of fusion may include, but is not limited to, a weighted average method.

Exemplarily, the identification results of barrier gates include location information of the barrier gates of the parking lot. The vehicle may acquire the location information of the barrier gate of the parking lot sent by the barrier gate apparatus through the communication connection between the vehicle and the barrier gate apparatus; or, the vehicle can also determine the location information about the barrier gate of the parking lot based on the received GPS signal, when identifying the barrier gate of the parking lot. The service apparatus may determine the location information of the barrier gate of the parking lot as the entrance location of the parking lot.

The service apparatus may acquire the aforementioned GPS signal and barrier gates of the parking lot from driving data uploaded by the vehicles. Optionally, for reducing the volume of processing data, the service apparatus may identify the detection results of parking spaces and indicate the available parking spaces from the mass volume of driving data updated by vehicles, and the driving data including signs of the parking lots is used as the driving data for generating the parking lot list.

Step 220, clustering the entrance locations to obtain data clusters.

After acquiring some entrance locations of multiple parking lots, the service apparatus may cluster the entrance locations. Clustering refers to a process of grouping similar entrance locations into respective data clusters, where the data cluster generated by clustering is a set of a group of entrance locations, and the same cluster includes the entrance locations that are similar to each other and dissimilar to the entrance locations included in other data clusters. Therefore, each data cluster may correspond to a parking lot, when the multiple data clusters are obtained by the clustering.

The service apparatus may cluster multiple entrance locations by the clustering algorithm without predetermined numbers of clusters to avoid artificially limiting the number of parking lots. In practice, it is unpredictable as to the number of the parking lots where multiple vehicles will drive into.

Exemplarily, the service apparatus may cluster multiple entrance locations by the density clustering method without manually determining the number of clusters, and is also capable of identifying the clusters with any shapes, which can effectively process data noise. The results of clustering may be controlled by adjusting parameters of neighborhood distance and destiny threshold in destiny clustering, so that the density clustering algorithm may classify two entrance locations of physically close but belonging to different parking lots into different data clusters.

Step 230, based on the entrance locations included in each data cluster of data clusters, determining a standard entrance location of the parking lot corresponding to each data cluster.

By the clustering, the service apparatus can obtain the data clusters, each data cluster including different entrance locations. The entrance location included by each data cluster may be configured to indicate the entrance locations of the parking lot detected by different vehicles, when they are driving to the same parking lot.

The service apparatus may calculate a more accurate entrance location based on multiple entrance locations included by each data cluster as the standard entrance location of the parking lot corresponding to the each data cluster. The methods for calculating the standard entrance location include a center method, a center of gravity method or any method for calculating center position of a point cloud distribution, and the embodiments of the present application do not make any limitation to it.

Optionally, each parking lot in practice may include multiple different parking entrances thereof. In order to accurately distinguish the different entrances in the same parking lot, the service apparatus may cluster individually the multiple entrance locations included in each data cluster to obtain multiple subset of the data clusters. Each subset of data clusters may correspond to one entrance of the parking lot, and the service apparatus may separately obtain the standard entrance locations corresponding to the multiple entrances of the same parking lot, based on the entrance locations included in each subset of data clusters and the standard entrance locations corresponding to each subset of data clusters.

Step 240, generating the parking lot list including the standard entrance locations of respective parking lots.

The service apparatus may generate the parking lot list which includes the standard entrance locations of one or more parking lots. Optionally, the parking lot lists may include parking lot signs for each parking lot, in order to easily distinguish the different parking lots.

It can be seen that in the previous embodiments, at one time, the service apparatus may obtain entrance locations of the different parking lots where multiple vehicles drive in, by clustering the entrance locations, the entrance locations of the same parking lot will be clustered into the same data cluster, then the number of the parking lots will be determined. Further, the service apparatus may calculate a more accurate entrance location that serve as the standard entrance location of each parking lot, based on entrance locations included in each data cluster. Therefore, the service apparatus may quickly generate the parking lot list including multiple parking lots, and the standard entrance location of each parking lot is accurate, which is beneficial for using the parking lot list in order to assist in realizing intelligent parking.

In one embodiment, the respective parking lot included in the parking lot list may be marked as available parking lots and unavailable parking lots. The available parking lots may refer to the parking lots that are visible to users and are available when applying the parking lot list, and the unavailable parking lots may refer to the parking lots that are invisible to users and are not considered when applying the parking lot list. The number of entrance locations included in the data clusters corresponding to the available parking lots may be more than the number of the entrance locations included in the data clusters corresponding to the unavailable parking lots. That is, the service apparatus may mark the parking lot corresponding to the data cluster with the greater number of entrance locations as the available parking lot, and mark the parking lot corresponding to the data cluster with the less number of entrance locations as the unavailable parking lot.

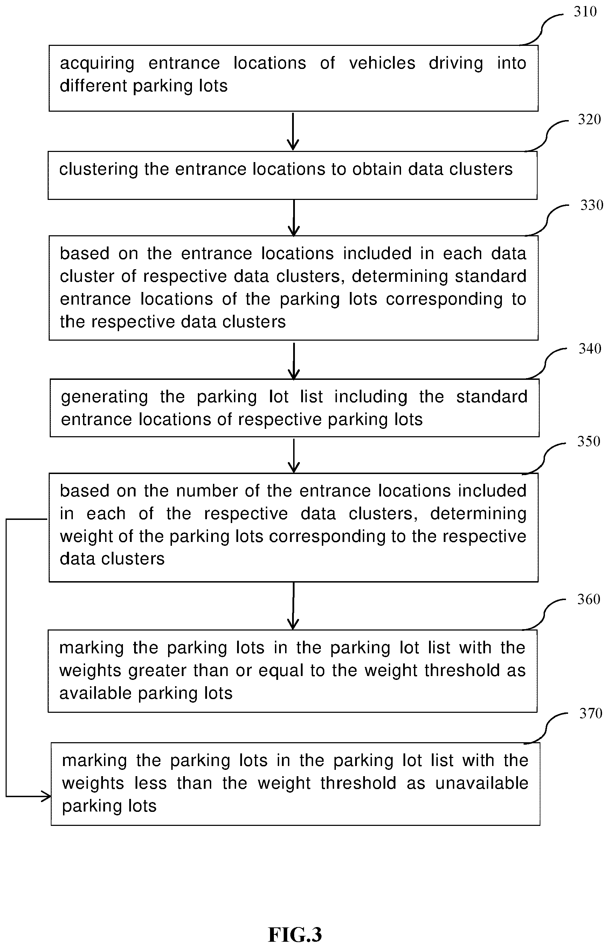

Disclosed in FIG.3 is a flow schematic diagram of another method for generating a parking lot list provided by an embodiment of the present application. The method may be applicable to aforementioned service apparatus. Steps 310-340 shown in FIG.3 may refer to the steps 210-240 of the forgoing embodiments, which will not be repeated below. As shown in FIG.3, the method also includes following steps:
Step 350, based on the number of the entrance locations included in each of the respective data clusters, determining the weight of the parking lot corresponding to the respective data clusters.

The service apparatus may determine the weight of the respective parking lots based on the predetermined correspondence between the number of the entrance locations and the weights, and the number of the entrance locations included in each data cluster. Alternatively, based on the number of the entrance locations included in each data cluster, the weight of the respective parking lots can be determined by means of the non-liner transformation, which is not specifically limited herein.

Step 360, marking the parking lots in the parking lot list with the weights greater than or equal to the weight threshold as the available parking lots.

Step 370, marking the parking lots in the parking lot list with the weights less than the weight threshold as the unavailable parking lots.

The weight threshold may be determined according to the actual business, or may be empirical values, which is not specifically limited herein.

In some embodiments, the service apparatus may also perform only the preceding step 360, or only the preceding step 370.

It can be seen that in the foregoing embodiment, the service apparatus may set up a screening mechanism based on the amount of data about different parking lots, i.e., setting parking lots with a less number of entrance locations as unavailable parking lots, and setting parking lots with a greater number of entrance locations as available parking lots, in order to improve the accuracy of the parking lot list.

In an embodiment, the parking lot list generated by the service apparatus may provide the vehicle with auxiliary information for intelligent parking. After the parking lot list is generated, the vehicle may also continuously generate new driving data. By using the entrance locations of the vehicles driving into the parking lots in the new driving data, the service apparatus may update the generated parking lot list, for example incrementally update it, so that the accuracy of the parking lot list can be continuously improved.

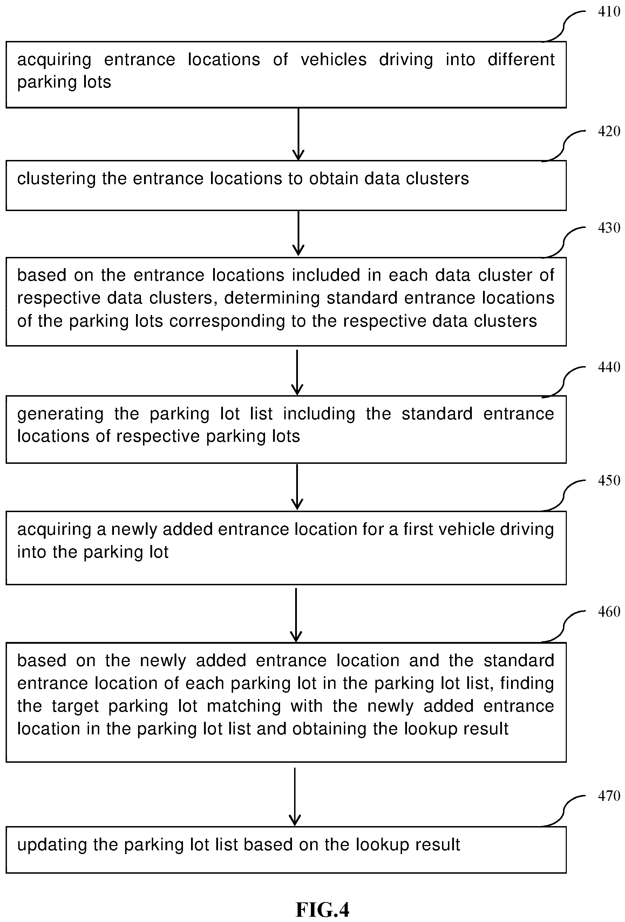

Disclosed in FIG.4 is a flow schematic diagram of another method for generating a parking lot list provided by an embodiment of the present application. The method may be applicable to the aforementioned service apparatus. Steps 410-440 shown in FIG. 4 may refer to steps 210-240 of the foregoing embodiment, which will not be repeated below. As shown in FIG. 4, the method may also include the following steps:
Step 450, acquiring the newly added entrance location for a first vehicle driving into the parking lot.

The first vehicle may be any one connected with the service apparatus via communication, may be any one of the multiple vehicles uploading the driving data to the service apparatus prior to generating the parking lot list, or also may be any one of vehicles uploading the driving data to the service apparatus for the first time after the parking lot list is generated, which is not specifically limited herein.

The parking lot into which the first vehicle drives may be any parking lot included in the parking lot list, or may be a parking lot not included in the parking lot list, which is not specifically limited herein. The newly added entrance location of the parking lot which the first vehicle drives into may be determined on the basis of the GPS loss location of the GPS signal received by the first vehicle and/or the identification result of the barrier gate of the first vehicle, which is not specifically limited herein.

Step 460, based on the newly added entrance location and the standard entrance location of each parking lot in the parking lot list, finding out the target parking lot matching with the newly added entrance location in the parking lot list and obtaining a lookup result.

The respective parking lots in the parking lot list may be stored in a data structure that is easy to find, in order to reduce the time required to find them. Exemplarily, the respective parking lots included in the parking lot list may be stored in a Tree format, such as KDTree (K-Dimensional Tree).

As the service apparatus obtains the newly added entrance location, it may determine the distance between the newly added entrance location and the respective standard entrance locations one by one until it finds the parking lot with the distance less than a specified threshold as a target parking lot matching the newly added entrance location. The above described respective standard entrance locations may include the standard entrance location marked as the available parking lots, and/or, the standard entrance location marked as the unavailable parking lots, which is not specifically limited herein.

If the service apparatus looks up a target parking lot in the parking lot list, it may feedback a lookup result used to indicate that the parking lot list has a target parking lot that matches the newly added entrance location.

If the service apparatus searches over each parking lot included in the parking lot list, and is still unable to find a target parking lot with the distance less than the specified threshold, it can feedback a lookup result used to indicate that there is no target parking lot in the parking lot list that matches the newly added entrance location.

Step 470, updating the parking lot list according to the lookup result.

The service apparatus can determine different updating strategy based on different lookup results.

Optionally, if the lookup result indicates that there is a target parking lot in the parking lot list, the service apparatus may update a first data cluster by adding the newly added entrance location to the first data cluster corresponding to the target parking lot; and, the service apparatus may adjust the standard entrance location of the target parking lot, based on the entrance locations included in the updated first data cluster.

Exemplarily, assuming that the target parking lot matched with the newly added entrance location is a parking lot A in the parking lot list, the newly added entrance location for the first vehicle to drive into the target parking lot is Pn, and the first data cluster {PA} corresponding to the parking lot A may include 6 entrance locations, respectively, P1, P2, P3, P4, P5 and P6. The service apparatus may add the newly added entrance location Pn to the first data cluster {PA}. The updated first data cluster {PA} may include 7 entrance locations. As the number of entrance locations included in the first data cluster {PA} is increased, the central location of the point cloud distribution of the first data cluster {PA} may change. Therefore, the service apparatus may calculate the point cloud distribution center location of the updated first data cluster {PA} again to determine the central location of the recalculated point cloud distribution as the new standard entrance location for the target parking lot.

It should be noted that the central location of the point cloud distribution calculated by the service apparatus based on the entrance locations included by the updated target data clusters may be the same as or different from the standard entrance location prior to the updating, which is not specifically limited herein.

Optionally if the lookup result indicates that the target parking lot does not exist in the paring lot list, the service apparatus may add the parking lot corresponding to the newly added entrance location to the parking lot list as the newly added parking lot, and determine the newly added entrance location as a standard entrance location for the newly added parking lot.

Exemplarily, assuming that the parking lot list includes 5 parking lots, and the parking lot corresponding to the newly added entrance location does not belong to any of the above-described 5 parking lots, the service apparatus may add the parking lot corresponding to the newly added entrance location as the newly added parking lot to the parking lot list, and set the newly added entrance location as the standard entrance location of the newly added parking lot. Thus, the updated parking lot list may include 6 parking lots. In addition, after adding the newly added parking lot to the parking lot list, the service apparatus may reconstruct the KDTree data structure of the parking lot list and overwrite the old KDTree data structure.

It can be seen that in the foregoing embodiment, after generating the parking lot list, the service apparatus may continue to receive the driving data uploaded by vehicles and incrementally update the parking lot list according to the newly added entrance locations in the driving data, which may dynamically update the parking lot list in real time. As the number of entrance locations included in the data cluster corresponding to each parking lot increases, the standard entrance location of each parking lot can become more accurate and at the same time, new parking lots can be added to the parking lot list timely, gradually expanding the data volume of the parking lot list, which is beneficial for expanding the scope of application of the parking lot list.

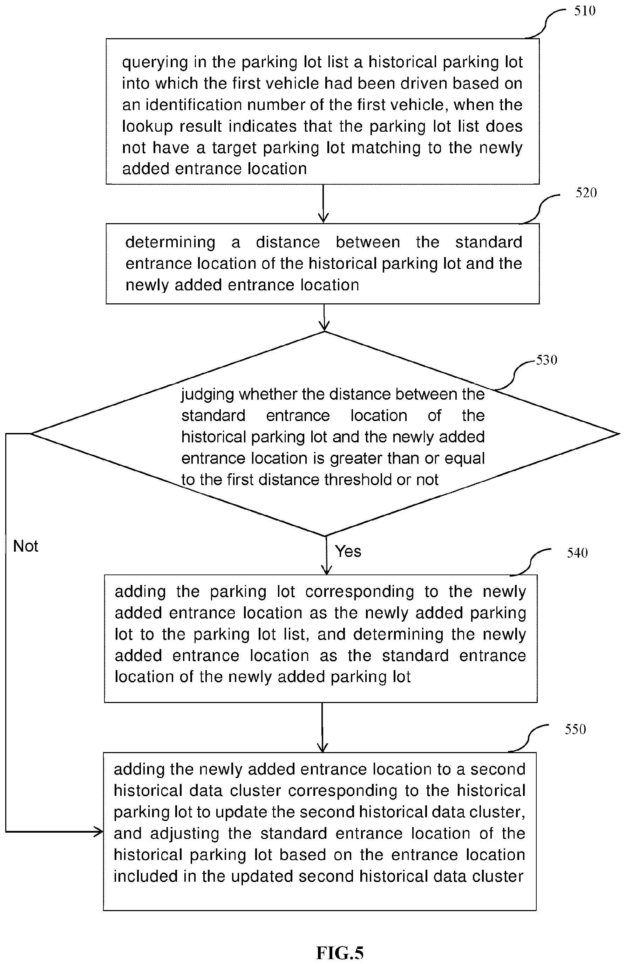

In one embodiment, since there may be instability in the GPS signal, even if the same vehicle enters the same parking lot multiple times, there may be differences in the entrance locations of the parking lot as determined each time, and there may be a problem of inaccurate lookup result for finding a target parking lot in the parking lot list due to the inaccuracy of the GPS signal, which may result in inaccurate updating of the parking lot list. As shown in FIG. 5, which is a flow schematic diagram of an implementation of updating a parking lot list based on a lookup result provided in one embodiment of the present application, performing the implementation as shown in FIG. 5. It may improve the accuracy of incrementally updating the parking lot. As shown in FIG. 5, the following steps may be included:
Step 510, when the lookup result indicates that the parking lot list does not have the target parking lot that matches the newly added entrance location, the historical parking lots that the first vehicle had driven into are queried in the parking lot list based on the identification number of the first vehicle.

The first vehicle may drive into a number of different parking lots, and the parking lots driven into may include parking lots in the parking lots list. The service apparatus may store information in respect of the parking lots that the first vehicle drove into, and use the vehicle identification number as an index, for ease of finding.

It is noted that the service apparatus can find one or more historical parking lots that the first vehicle had driven into based on the identification number, and the historical parking lot is different from the parking lot that the first vehicle is driving into this time, corresponding to the newly added entrance location.

Step 520, determining the distance between the standard entrance location of the historical parking lot and the newly added entrance location.

If there is a plurality of historical parking lots, the service apparatus may determine, one by one, the distance between the standard entrance location for each historical parking lot and the newly added entrance location, and, for each historical parking lot, may perform the step 530 as described below.

Step 530, determining whether the distance between the standard entrance location of the historical parking lot and the newly added entrance location is greater than or equal to a first distance threshold; if yes, it performs the step 540; if not, it performs the step 550.

The first distance threshold may be set according to the actual business requirements, which are not specifically limited herein. For example, the first distance threshold may be set to 50 meters or 100 meters. Optionally the first distance threshold may be different from the specified threshold corresponding to finding the target parking lot in the parking list. For example, the first distance threshold may be greater than the specified threshold.

If the distance between the standard entrance location of the historical parking lot and the newly added entrance location is farther (greater than the first distance threshold), there is a higher probability that the parking lot corresponding to the newly added entrance location is a new parking lot, and thus the service apparatus may perform the step 540 to add the parking lot corresponding to the newly added entrance location to the parking lot list as the newly added parking lot.

If the distance between the standard entrance location of the historical parking lot and the newly added entrance location is closer, it may be unable for the service apparatus to find the target parking lot matching the newly added entrance location from the parking lot list during the initial lookup, due to the drift of the GPS signal of the first vehicle. Therefore, the service apparatus may perform the step 550 to abandon the creation of the new parking lot in the parking lot list, so that the same parking lot does not correspond to the list mappings in the parking lot list, which may improve the accuracy of the incremental updating of the parking lot list.

It is noted that in some embodiments, the service apparatus may also perform only the step 540, or only the step 550, which is not specifically limited herein.

Step 540 adding the parking lot corresponding to the newly added entrance location as the newly added parking lot to the parking lot list, and determining the new entrance location as the standard entrance location of the newly added parking lot.

Step 550 adding the newly added entrance location to a second data cluster corresponding to the historical parking lot to update the second data cluster, and adjusting the standard entrance location of the historical parking lot based on the entrance location included in the updated second data cluster.

After the service apparatus adds the newly added entrance locations to the historical data cluster, the number of entrance locations included in the historical data cluster increases, and the central location of the point cloud distribution calculated based on the entrance locations included in the updated historical data cluster may be the same as or different from the standard entrance locations of the historical parking lot prior to the updating, which is not specifically limited herein.

It can be seen that, in the foregoing embodiment, when the service apparatus is unable to query the target parking lot matched to the newly added entrance location in the parking lot list, it can first query the historical parking lot that the first vehicle once drove into and determine whether the newly added entrance location of the current driving is too close to the standard entrance location of the historical parking lot; if the judgment result is no, i.e., the newly added entrance location is too far away from the standard entrance location of the historical parking lot, the service apparatus may add the new parking lot to the parking lot list to increase the number of parking lots included in the parking lot list; if the judgment result is yes, i.e., the distance between the newly added entrance location and the standard entrance location of the historical parking lot is too close, the service apparatus abandons adding the new parking lot to the parking lot list, so as not to create multiple list mappings for the same parking lot, which may improve the incremental updating accuracy of the parking lot list.

It should be noted that the incremental updating may continuously increase the number of entrance locations included in the data clusters corresponding to the respective parking lots. Thus, if the respective parking lots correspond to the markers of available parking lots or unavailable parking lots upon generating the parking lot list, the markers may change with the incremental updating of the parking lot list. Exemplarily, the number of entrance locations included in the data cluster corresponding to the unavailable parking lot may be gradually increased with the incremental updating; when the number of entrance locations is increased to a certain degree, the unavailable parking lot may be updated to the available parking lot. Exemplarily, when the parking lot corresponding to the new entrance location is added to the parking lot list as the newly added parking lot, the newly added parking lot may be marked as the unavailable parking lot.

In one embodiment, the service apparatus may perform a full volume updating to the parking lot list, in addition to the incremental updating to the parking lot list. The incremental updating may refer to updating only the parking lot information in the parking lot list that needs to be modified, while other parking lot information remains unchanged. The full volume updating may refer to updating the entire parking lot list. The full volume updating may include the following:
The service apparatus obtains, in accordance with first time interval, the entrance locations included in the data cluster corresponding to each parking lot in the parking lot list, and re-clusters the obtained respective entrance locations to update the parking lot list based on the clustering results.

The first time interval can be set according to the actual business requirements, which is not specifically limited herein. For example, the first time interval may include 5 days, half a month, half a year, but it is not limited thereto. When performing the full volume updating, the clustering method of the service apparatus for re-clustering the respective entrance locations may be similar to the clustering method when generating the parking lot list. The clustering results of the re-clustering may also include a plurality of new data clusters, and the new data clusters obtained after the re-clustering may be the same as or different from the plurality of the data clusters when generating the parking lot list. The service apparatus may calculate new standard entrance locations based on the plurality of the new data clusters obtained after the re-clustering, thereby updating the parking lot list.

After the parking lot list is generated, the total number of entrance locations included in the parking lot list increases with constant incremental updating. Re-clustering by using all entrance locations at certain intervals allows global optimization of the parking lot list and can further improve the accuracy of the parking lot list.

In one embodiment, the service apparatus may further determine the distance between the entrance locations included in the respective data clusters in accordance with the second time interval and delete any one of the two entrance locations meeting the distance between them less than the second distance threshold, when the distance between two entrance locations is less than the second distance threshold.

The second time interval may be set according to the actual business requirements, and the second time interval may be the same as or different from the first time interval, which is not specifically limited herein. For example, the second time interval may include 5 days, 7 days, three months, and the like, which is not specifically limited herein. The second distance threshold may also be set according to actual business requirements, which is not specifically limited herein. The second distance threshold may be set to a smaller value, which may be smaller than the first distance threshold. For example, the second distance threshold may include 0.5 meters, 1 meter, 3 meters, etc., but it is not limited thereto.

In other words, the service apparatus can periodically delete entrance locations that are more similar with and closer to each other to reduce the number of entrance locations, which can reduce data redundancy and speed up the updating speed of the parking lot list.

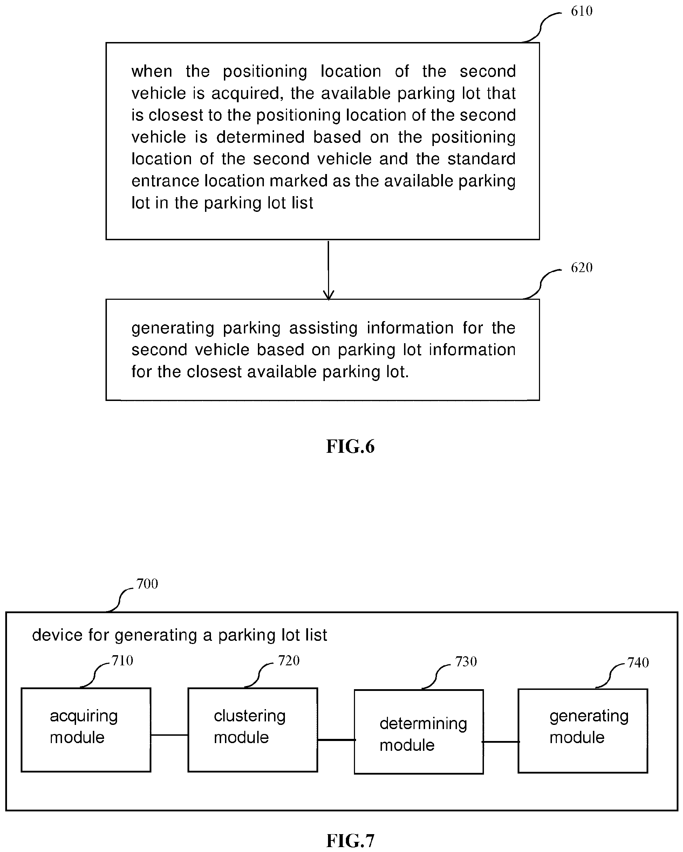

In one embodiment, referring to FIG. 6, which is a schematic flow diagram of a method of applying a parking lot list provided in one embodiment of the present application. As shown in FIG. 6, the method may include the following:
Step 610, when the positioning location of the second vehicle is acquired, the available parking lot that is the closest to the positioning location of the second vehicle is determined based on the positioning location of the second vehicle and the standard entrance location marked as the available parking lot in the parking lot list.

The second vehicle may be any vehicle, either the vehicle involved in generating or updating the parking lot list in the preceding embodiments, or a vehicle unrelated to the generation or updating of the parking lot list, which is not specifically limited herein.

The parking lot list may be obtained by any of the methods for generating a parking lot list provided in the preceding embodiments, and the following will not be repeated herein. The parking lot with a greater number of entrance locations included in the corresponding data cluster may be labeled as the available parking lot, and the standard entrance locations of the available parking lot are more accurate and more credible.

The service apparatus may determine the distance between the positioning location of the second vehicle and the standard entrance location of each available parking lot, and determine therefrom the available parking lot with the shortest distance as the available parking lot closest to the second vehicle.

It is to be noted that the above determination of available parking lots close to the positioning location of the second vehicle is illustrated by determining the closest available parking lot as the example but it is not limited thereto, and the next closest available parking lot may also be determined, etc.

Step 620, generating parking assisting information for the second vehicle based on parking lot information for the closest available parking lot.

The parking lot information for the closest available parking lot may include any one or more of the following: the standard entrance location of the parking lot, the number of available parking spaces in the parking lot, and a high precision map of the parking lot. However, it is not limited thereto.

The parking assistance information generated by the service apparatus based on the parking lot information may include one or more of the following information, which is not specifically limited herein:
Memorized parking instructions, wherein the memorized parking instructions may be used to instruct the second vehicle to download the high precision map of the closest parking lot and switch the second vehicle to the automatic parking mode;
Parking lot entrance prompting information, wherein the parking lot entrance prompting information may be used to indicate the standard entrance location closest to the parking lot to prompt the second vehicle to drive into the parking lot from the standard entrance location;

Parking route planning information, wherein the parking route planning information may be used to indicate a driving route for the second vehicle from pulling into the closest parking lot to parking in the parking space.

It can be seen that in the foregoing embodiment, the parking lot list can be used to assist in realizing functions such as memorized parking, entrance prompts, parking route planning, etc., which is beneficial for increasing the success rate of intelligent parking and improves the user experience of intelligent parking.

Corresponding to the foregoing method embodiments of the present application for implementing the application function, the embodiments of the present application also provides a device for generating a parking lot list, a service apparatus, and corresponding embodiments thereof.

Disclosed in FIG. 7 a schematic diagram of a structure of a device for generating a parking lot list provided in an embodiment of the present application, which may be applied to the aforementioned service apparatus. As shown in FIG. 7, the device for generating a parking lot list 700 may include: an acquiring module 710, a clustering module 720, a determining module 730, and a generating module 740.

The acquiring module 710 is used for acquiring the entrance locations of the plurality of vehicles driving into different parking lots.

The clustering module 720 is used for clustering the plurality of the entrance locations to obtain the plurality of the data clusters, wherein each of the data clusters corresponds to one parking lot.

The determining module 730 is used for determining the standard entrance location of the parking lot corresponding to each data cluster, based on the entrance location included in each of the plurality of the data clusters.

The generating module 740 is used for generating the parking lot list including the standard entrance locations of the respective parking lots.

In one embodiment, the parking lot list may include: available parking lots and unavailable parking lots; the data clusters corresponding to the available parking lots include the greater number of entrance locations than that included by the data clusters corresponding to the unavailable parking lots.

In one embodiment, the generating module 740 may also be used to determine the weight for the parking lot corresponding to each data cluster based on the number of entrance locations included in each of the respective data clusters;
to mark the parking lots in the parking lot list that have weights greater than or equal to the weight threshold as available parking lots; and/or.
to mark the parking lots in the parking lot list that has weights less than the weight threshold as unavailable parking lots.

In one embodiment, the acquiring module 710 may also be used to acquire the newly added entrance location for the first vehicle driving into the parking lot.

The device for generating a parking lot list 700 may further comprise: an updating module.

The updating module is used to acquire the newly added entrance location of the first vehicle driving into the parking lot; to find the target parking lot matching to the newly added entrance location in the parking lot list, based on the newly added entrance location and the standard entrance location of each parking lot in the parking lot list, and to obtain the lookup result; as well as to update the parking lot list based on the lookup result.

In one embodiment, the updating module may further be used to update the first data cluster by adding the newly added entrance location to the first data cluster corresponding to the target parking lot when the lookup result indicates that the parking lot list has the target parking lot matching to the newly added entrance location; and adjusting the standard entrance location of the target parking lot based on the entrance location included in the updated first data cluster.

In one embodiment, the updating module may further be used to add the parking lot corresponding to the newly added entrance location as the newly added parking lot to the parking lot list when the lookup result indicates that the parking lot list does not have the target parking lot matching to the newly added entrance location, and to determine the newly added entrance location as the standard entrance location for the newly added parking lot.

In an embodiment, the updating module may further be used to query in the parking lot list a historical parking lot that the first vehicle had driven into, based on the identification number of the first vehicle when the lookup result indicates that the parking lot list does not include the target parking lot; and to determine the distance between the standard entrance location of the historical parking lot and the newly added entrance location; and to add the parking lot corresponding to the newly added entrance location as the newly added parking lot to the parking lot list when the distance is greater than or equal to the first distance threshold, and to determine the newly added entrance location to be the standard entrance location of the newly added parking lot.

In one embodiment, the updating module may further be used to, after determining the distance between the standard entrance location of the historical parking lot and the newly added entrance location, add the newly added entrance location to the second data cluster corresponding to the historical parking lot to update the second data cluster, when the distance between the standard entrance location of the historical parking lot and the newly added entrance location is less than the first distance threshold; and adjust the standard entrance location of the historical parking lot based on the entrance location included in the updated second data cluster.

In one embodiment, the updating module may further be used to acquire entrance locations included in the data cluster corresponding to each parking lot in the parking lot list in accordance with the first time interval; and re-clustering each of the acquired entrance locations to update the parking lot list based on the clustering results.

In one embodiment, the updating module may further be used to determine, the distance between the entrance locations included in the respective data clusters in accordance with the second time interval; and when the distance between two entrance locations is less than the second distance threshold, to delete any one of the two entrance locations whose distance between them is less than the second distance threshold.

In one embodiment, the device for generating a parking lot list 700 may further comprise: a parking assisting module.

The parking assisting module may be used, upon acquiring the positioning location of the second vehicle, to determine the available parking lot closest to the positioning location of the second vehicle, based on the positioning location of the second vehicle and the standard entrance location thereof marked as the available parking lot in the parking lot list; and to generate parking assisting information for the second vehicle based on the parking lot information of the closest available parking lot.

It can be seen that in the foregoing embodiment, the device for generating a parking lot list may acquire the entrance locations of a plurality of vehicles driving into different parking lots at one time, and determine the number of parking lots by clustering the plurality of the entrance locations. Further, the device for generating the parking lot list may calculate a more accurate entrance location as the standard entrance location for each parking lot based on the entrance locations included in each data cluster. Thus, the device for generating the parking lot list can quickly generate the parking lot list including a plurality of parking lots, and the standard entrance location of each parking lot is accurate, which is beneficial for using the parking lot list to assist in realizing intelligent parking. Further, the device for generating the parking lot list may also perform incremental updating and full volume updating to the generated parking lot list, which is beneficial for gradually improving the accuracy of the parking lot list.

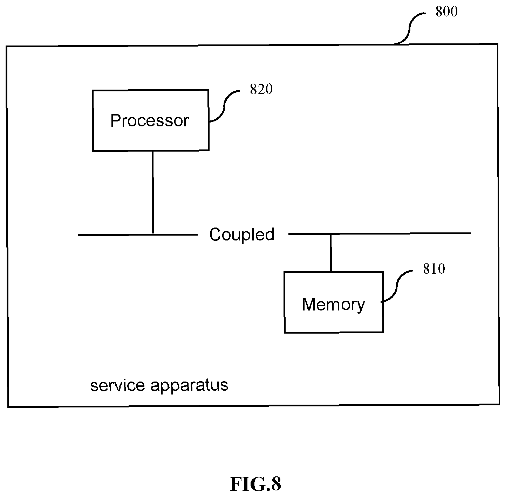

Disclosed in FIG. 8 is a schematic diagram of a structure of a service apparatus provided in one embodiment of the present application. As shown in FIG. 8, the service apparatus 800 may include:
a memory 810, for storing executable program codes;
a processor 820, for being coupled to the memory 810;
wherein the processor 820 calls the executable program codes stored in the memory 810 to execute any one of the methods for generating a parking lot list provided by embodiments of the present application.

It should be noted that the service apparatus shown in FIG. 8 may also include components not shown, such as a power supply, a communication module, etc., which are not described in this embodiment.

Embodiments of the present application disclose a computer readable storage medium for storing computer programs therein, wherein the computer programs, when executed by the processor, causes the processor to perform any of the methods for generating a parking lot list provided by embodiments of the present application.

Embodiments of the present application disclose a computer program product comprising a non-transitory computer readable storage medium for storing the computer programs, and the computer programs are operable to cause the computer to perform any of the methods for generating a parking lot list provided in embodiments of the present application.

It should be understood that references in the specification to "an embodiment" or "one embodiment" mean that a particular feature, structure, or characteristic associated with an embodiment is included in at least one embodiment of the present application. Therefore, "in an embodiment" or "in one embodiment" appearing throughout the specification may not necessarily refer to the same embodiment. Furthermore, these particular feature, structure or characteristic may be combined in one or more embodiments in any suitable manner. Those skilled in the art should also appreciate that the embodiments described in the specification are optional embodiments, and the actions and modules involved are not essential for the present application.

In various embodiments of the present application, it should be understood that the magnitude of the serial number of each of the above processes does not imply an inevitable sequence of the order of execution, and the order of execution of each process should be determined by its function and inherent logic without constituting any limitation to the process of implementation of the embodiments of the present application.

The units illustrated above as separated parts may or may not be physically separated, and the parts shown as units may or may not be object units, i.e., they may be located in one place or they may be distributed to a plurality of network units. Some or all of these units may be selected to fulfill the purpose of the scheme of present embodiment according to actual needs.

In addition, each functional unit in each embodiment of the present application may be integrated in a single processing unit, or each unit may physically exist separately, or two or more units may be integrated in a single unit. The above integrated units may be realized either in the form of hardware or in the form of software function units.

The above integrated units may be stored in the computer-accessible memories when the above integrated units are realized as software functional units and sold or used as stand-alone products. Based on this understanding, the technical solution of the present application in essence, or the part that makes contribution to the prior art, or all or part of the technical solution, may be embodied in the form of a software product, which is stored in a memory, including a number of requests for making a computer device (which may be a personal computer, a server, or a network device, etc., and in particular may be a processor in the computer device) perform some or all steps of the above methods of the various embodiments of the present application.

A person ordinarily skilled in the art would understand that all or some of the steps in the various methods of the foregoing embodiments can be accomplished by instructing the associated hardware by programs, which can be stored on a computer-readable storage medium, the storage medium includes Read-Only Memory (ROM), Random Access Memory (RAM), Programmable Read-only Memory (PROM), Erasable Programmable Read Only Memory (EPROM), One-time Programmable Read-Only Memory (OTPROM), Electrically-Erasable Programmable Read-Only Memory (EEPROM), Compact Disc Read-Only Memory (CD-ROM) or other optical disk memory, magnetic disk memory, magnetic tape memory, or any other computer-readable mediums capable of being used to carry or store data.

The method for generating a parking lot list, the device for the same, a service apparatus, and a storage medium provided in the embodiments of present application are described above. Specific examples are applied herein to illustrate the principles and implementations of present application, and the above descriptions of the embodiments are only used to assist in understanding the method of present application and its core ideas. At the same time, for a person ordinarily skilled in the art, based on the concept of present application, changes are made to the specific implementation and its application scope. In summary, the contents of this specification should not be construed as a limitation to the present application.

## Claims

1. A method for generating a parking lot list, **characterized in that** the method comprises:
acquiring entrance locations of vehicles driving into different parking lots;
clustering the entrance locations to obtain data clusters, wherein each data cluster corresponds to one parking lot;
determining standard entrance locations for the parking lots corresponding to each data cluster, based on the entrance locations included in each of the data clusters;
generating the parking lot list including the standard entrance location for each parking lot.

2. The method according to claim 1, **characterized in that**
the parking lot list comprises available parking lots and unavailable parking lots;
wherein the number of entrance locations included in the data clusters corresponding to the available parking lots is more than the number of entrance locations included in the data clusters corresponding to the unavailable parking lots.

3. The method according to claim 2, further comprising:
determining weights of parking lots corresponding to the respective data clusters based on the number of entrance locations included in each of the respective data clusters;
marking those parking lots in the parking lot list having weights greater than or equal to the weights threshold as the available parking lots; and/or
marking those parking lots in the parking lot list having weights less than the weights threshold as the unavailable parking lots.

4. The method according to any one of claims 1-3, **characterized in that** the method further comprises:
acquiring a newly added entrance location of a first vehicle driving into the parking lot;
finding a target parking lot matching to the newly added entrance location in the parking lot list based on the newly added entrance location and the standard entrance location of each parking lot in the parking lot list, and obtaining a lookup result;
updating the parking lot list based on the lookup result.

5. The method according to claim 4, **characterized in that** the updating the parking lot list based on the lookup results comprises:
updating a first data cluster by adding the newly added entrance location to the first data cluster corresponding to the target parking lot, if the lookup result indicates that the parking lot list has a target parking lot matching to the newly added entrance location;
adjusting the standard entrance location for the target parking lot based on the entrance location included in the updated first data cluster.

6. The method according to claim 4, **characterized in that** the updating the parking lot list based on the lookup results comprises:
adding the parking lot corresponding to the newly added entrance location to the parking lot list as a newly added parking lot, and determining the newly added entrance location as a standard entrance location for the newly added parking lot, if the lookup result indicates that the parking lot list does not have the target parking lot matching to the newly added entrance location.

7. The method according to claim 6, **characterized in that**
the adding the parking lot corresponding to the newly added entrance location to the parking lot list as a newly added parking lot, and determining the newly added entrance location as a standard entrance location for the newly added parking lot, comprises:
querying in the parking lot list a historical parking lot into which the first vehicle had been driven based on an identification number of the first vehicle;
determining a distance between the standard entrance location of the historical parking lot and the newly added entrance location;
adding the parking lot corresponding to the newly added entrance location as the newly added parking lot to the parking lot list, when the distance is greater than or equal to a first distance threshold, and determining the newly added entrance location as the standard entrance location of the newly added parking lot.

8. The method according to claim 7, **characterized in that** the method further comprises:
updating a second data cluster by adding the newly added entrance location to the second data cluster corresponding to the historical parking lot, when the distance is less than the first distance threshold;
adjusting the standard entrance location of the historical parking lot based on the entrance location included in the updated second data cluster.

9. The method according to claim 4, **characterized in that** the method further comprises:
acquiring the entrance location included in the data cluster corresponding to each parking lot in the parking lot list in accordance with a first time interval;
re-clustering the acquired respective entrance locations to update the parking lot list according to the clustering results.

10. The method according to claim 4, **characterized in that** the method further comprises:
determining distances between the entrance locations included in the respective data clusters in accordance with a second time interval;
deleting any one of the two entrance locations if the distance between two entrance locations is less than the second distance threshold.

11. The method according to any one of claims 2, 3, 5-9, **characterized in that** the method further comprises:
determining the available parking lot that is close to a positioning location of a second vehicle based on the positioning location of the second vehicle and the standard entrance location thereof marked as the available parking lot in the parking lot list, when the positioning location of the second vehicle is acquired;
generating parking assisting information for the second vehicle based on parking lot information of the close available parking lot.

12. A device for generating a parking lot list, **characterized in that** it comprises:
an acquiring module, for acquiring entrance locations of vehicles driving into different parking lots;
a clustering module, for clustering the entrance locations to obtain a plurality of data clusters, wherein each data cluster corresponds to one parking lot;
a determining module, for determining a standard entrance location of the parking lot corresponding to each of the data clusters, based on the entrance locations included in each of the plurality of the data clusters; and
a generating module, for generating the parking lot list including the standard entrance locations of the respective parking lots.

13. The device according to claim 12, **characterized in that** the device further comprises:
an updating module, for acquiring a newly added entrance location of the first vehicle driving into the parking lot; finding a target parking lot in the parking lot list that matches to the newly added entrance location, according to the newly added entrance location and the standard entrance location of each parking lot in the parking lot list and obtaining a lookup result; and updating the parking lot list according to the lookup result.

14. A service apparatus, **characterized in that** it comprises a memory and a processor, the memory having computer programs stored therein, the computer programs being configured to cause the processor to implement the method as claimed in any one of claims 1 to 11 upon being executed by the processor.

15. A computer readable storage medium, having computer programs stored thereon, **characterized in that** the computer programs are configured to implement the method as claimed in any one of claims 1 to 11, upon being executed by the processor.
